# EUROPÄISCHE PATENTSCHRIFT

(11) **EP 2 847 620 B1**
(45) Veröffentlichungstag und Bekanntmachung des Hinweises auf die Patenterteilung: **01.07.2020**
(21) Anmeldenummer: 13727527.7
(22) Anmeldetag: 07.05.2013
(51) Int. Cl.: G01T 1/29, G06T 11/00

(54) **COMPUTERTOMOGRAFIE-VERFAHREN UND ANORDNUNG ZUR BESTIMMUNG VON MERKMALEN AN EINEM MESSOBJEKT**
COMPUTER TOMOGRAPHY METHOD AND ASSEMBLY FOR DETERMINING FEATURES OF A MEASUREMENT OBJECT
PROCÉDÉ DE TOMOGRAPHIE ASSISTÉE PAR ORDINATEUR ET DISPOSITIF DE DÉTERMINATION DE CARACTÉRISTIQUES D'UN OBJET À ANALYSER

(30) Priorität: 07.05.2012 DE 102012103989; 22.06.2012 DE 102012105478; 29.04.2013 DE 102013104361
(43) Veröffentlichungstag der Anmeldung: 18.03.2015
(73) Patentinhaber: Werth Messtechnik GmbH, 35394 Giessen (DE)
(72) Erfinder: KACHELRIESS, Marc, 90419 Nürnberg (DE); BAER-BECK, Matthias, 91054 Erlangen (DE); SCHMIDT, Ingomar, 35418 Buseck (DE); HAMMER, Michael, 35447 Reiskirchen (DE); CHRISTOPH, Ralf, 35394 Gießen (DE); SCHUBERT, Tristan, 35418 Giessen-Busseck (DE); RAUH, Wolfgang, 35094 Lahntal - Goßfelden (DE)
(74) Vertreter: Stoffregen, Hans-Herbert
(86) Internationale Anmeldenummer: PCT/EP2013/059530
(87) Internationale Veröffentlichungsnummer: WO 2013/167616

(56) Entgegenhaltungen:
- EP-A2- 2 009 592
- DE-A1-102011 004 598
- US-A- 6 163 589
- US-A1- 2005 185 753
- METTIVIER G ET AL: "Scatter Correction in Cone-Beam Breast Computed Tomography: Simulations and Experiments", IEEE TRANSACTIONS ON NUCLEAR SCIENCE, IEEE SERVICE CENTER, NEW YORK, NY, US, Bd. 59, Nr. 5, 1. Oktober 2012 (2012-10-01), Seiten 2008-2019, XP011474365, ISSN: 0018-9499, DOI: 10.1109/TNS.2012.2201955
- MATTHIAS BERTRAM ET AL: "<title>Scatter correction for cone-beam computed tomography using simulated object models</title>", PROCEEDINGS OF SPIE, Bd. 6142, 28. Februar 2006 (2006-02-28), Seite 61421C, XP055082150, ISSN: 0277-786X, DOI: 10.1117/12.651027
- THIERRY R ET AL: "Hybrid simulation of scatter intensity in industrial cone-beam computed tomography", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, Bd. 598, Nr. 2, 11. Januar 2009 (2009-01-11), Seiten 611-619, XP025800974, ISSN: 0168-9002, DOI: 10.1016/J.NIMA.2008.10.011 [gefunden am 2008-10-22]

## Beschreibung

Die vorliegende Erfindung bezieht sich auf ein Computertomografie-Verfahren zur dimensionellen Bestimmung von Merkmalen an einem Messobjekt, umfassend die Verfahrensschritte Durchstrahlen des Messobjekts in mehreren Drehstellungen mit der Strahlung einer Strahlungsquelle und Aufnahmen jeweils zugehöriger 2D-Durchstrahlungsbilder, Berechnen dreidimensionaler Volumeninformationen im Voxelformat aus den 2D-Durchstrahlungsbildem mittels Rekonstruktion, wobei in den Volumeninformationen Daten zur lokalen Strahlabsorption enthalten sind, und Generieren von Oberflächenpunkten aus den Volumeninformationen, vorzugsweise im Bereich von Materialübergängen, wobei vorzugsweise das Verfahren in einem Koordinatenmessgerät eingesetzt wird.

Aufgrund der Wechselwirkung, der bei der Computertomografie zumeist eingesetzten Röntgenstrahlung mit dem zu messenden Objekt, kommt es zu physikalischen Effekten, die die Abbildungsqualität bei der Durchstrahlung des Messobjektes mit der Messstrahlung negativ beeinflusst. U.a. sind Einflüsse durch Strahlaufhärtung, Streustrahlung, Nachleuchteffekte bekannt. Weitere physikalische Effekte sind Kegelstrahleffekte, Partialvolumen- bzw. Teilvolumeneffekte (erzeugt durch die Unterabtastung mit Pixeln der Ausdehnung größer Null), weitere Abtasteffekte beispielsweise erzeugt durch unterschiedliche Empfindlichkeiten der Detektorkanäle, die zu Streifen- oder Ringartefakten führen, Drehachsen-Artefakte bzw. Dreharten-Artefakte, der Einfluss von Störfeldern oder metallischen Implantaten und Messfeldüberschreitung.

Weitere Fehlerquellen bei der Computertomografiemessung, die im Sinne der Erfindung unter dem Oberbegriff physikalische Effekte verstanden werden, sind sämtliche Fehler der Sensorik, wie beispielsweise des Detektors wie Offsetabweichungen oder ähnliches, der Drehachse wie Taumelfehler oder Winkelschrittfehler, oder der Strahlenquelle wie Brennfleckdrift usw., sowie Abweichungen bei der mathematischen Verarbeitung der aufgenommenen Durchstrahlungsbilder zu den Volumendaten des Voxelvolumens (Rekonstruktion) wie beispielsweise bei der Logarithmierung der vom Detektor bestimmten Amplituden der Durchstrahlungsbilder oder der nicht exakten Rekonstruktion usw., und den daraus ermittelten Oberflächenmesspunkten. Diese weiteren Fehlerquellen können umso besser korrigiert werden, je später in der Verarbeitungskette eine Korrektur erfolgt, da die Effekte durch die erfindungsgemäße Simulation vollständiger erfasst werden können, wie in der Beschreibung des erfindungsgemäßen Verfahrens gezeigt wird. Auch hierbei auftretende Simulationsfehler werden zu den physikalischen Effekten gezählt und umso besser korrigiert, je später in der Verarbeitungskette die Korrektur erfolgt. Dies liegt darin begründet, dass die Abweichungen der Simulation zu einem idealen Messergebnis dann vollständiger erfasst und bei der Korrektur berücksichtigt werden. Das ideale Messergebnis selbst kann dabei auch einer Simulation entstammen, oder aber einem Modell wie CAD-Modell oder einer fehlerfreien oder fehlerarmen Messung mit dem Computertomografiesensor oder einem anderen Sensor.

Einige dieser Effekte lassen sich analytisch beschreiben und korrigieren, wie beispielsweise in der EP-A-1 415 179 in Form einer iterativen Artefaktkorrektur (IAR) für vornehmlich Strahlaufhärtungsartefakte oder in der WO-A-2006/094493 beschrieben, in Form einer nicht iterativen Artefaktkorrektur durch Vergleich der gemessenen Durchstrahlungslängen mit denen der Simulation einer idealen Tomografie, bei der keine Streustrahlung oder ähnliche Artefakte berücksichtigt werden. Oftmals ist jedoch die analytische Vorgehensweise sehr aufwändig oder nicht durchführbar und die auftretenden physikalischen Effekte, insbesondere die Streustrahlung, beeinflussen die Durchstrahlungsbilder und damit die in der Folge berechneten Oberflächenpunkte und Dimensionen am zu untersuchenden Merkmal des Bauteils bzw. Messobjektes, vornehmlich in zufälliger Ausprägung. Diesen Korrekturverfahren ist zudem gemein, dass sie stets eine Simulation mit der realen Messung vergleichen, um eine Korrekturkennlinie zu ermitteln.

Aufgabe der vorliegenden Erfindung ist es daher, zumindest teilweise die aufgrund der physikalischen Wechselwirkung entstehenden Messabweichungen bei der computertomografischen Abbildung, insbesondere durch Streustrahlung oder durch andere physikalische Effekte, wie Strahlaufhärtung, Kegelstrahleffekte, Nachleuchteffekte oder Ähnliches zu vermeiden oder zu korrigieren.

Aufgabe der Erfindung ist es auch, Fehler bei der Computertomografiemessung verursacht durch die Sensorik, wie beispielsweise des Detektors, der Drehachse und der Strahlenquelle, sowie durch Abweichungen bei der mathematischen Verarbeitung der aufgenommenen Durchstrahlungsbilder zum Voxelvolumen (Rekonstruktion) und den daraus ermittelten Oberflächenmesspunkten, sowie Fehler bei der erfindungsgemäßen Simulation zu vermeiden oder zu korrigieren.

Die Lösung der Aufgabe ist gekennzeichnet durch Verwendung von Korrekturdaten zur wahlweisen Korrektur physikalischer Effekte der Messdaten der Computertomografiemessung, wobei sich die Korrekturdaten aus der Differenz zwischen Simulationsdaten mit Berücksichtigung der jeweiligen physikalischen Effekte, wie beispielsweise Streustrahlung, Strahlaufhärtung,

Kegelstrahlartefakte und Simulationsdaten oder Solldaten ohne Berücksichtigung der jeweiligen physikalischen Effekte ergeben, wobei die zu korrigierenden Messdaten die Durchstrahlungsbilder und/oder die Volumeninformationen und/oder die Messpunkte sind.

Es werden die Messdaten einer Computertomografiemessung korrigiert werden, indem wahlweise einzelne oder mehrere der physikalischen Effekte simuliert werden und aus den Simulationsdaten Korrekturdaten bestimmt werden, die zur Korrektur der Messdaten der Computertomografiemessung verwendet werden.

Im Allgemeinen sieht die Erfindung dazu vor, dass die Durchstrahlungsbilder und/oder die Volumendaten und/oder die Koordinaten der Oberflächenpunkte selbst korrigiert werden.

Im Falle der Korrektur der Durchstrahlungsbilder bzw. der Volumendaten werden die den einzelnen Elementen, also Pixeln (bei Durchstrahlungsbildern) bzw. Voxeln (bei Volumendaten) zugeordneten Werte, bevorzugt Grauwerte, korrigiert. Bei Korrektur der Messpunktkoordinaten erfolgt eine Verschiebung der einzelnen Messpunktkoordinaten im Raum entsprechend der Korrektur, vorzugsweise in Form eines Korrekturvektors. Zur Ermittlung der Korrekturdaten wird erfindungsgemäß eine Simulation der computertomografischen Abbildung unter Berücksichtigung der physikalischen Effekte durchgeführt. Zusätzlich wird vorzugsweise auch eine Simulation einer idealen computertomografischen Abbildung ohne Berücksichtigung der physikalischen Effekte durchgeführt, meist Parallelstrahlsimulation genannt. Ergebnis einer Parallelstrahlsimulation ist das Model (Solldaten), das der Simulation zugrunde gelegt wurde, mit der Ausnahme, dass Simulationsfehler überlagert sind.

Vorteil dieser Vorgehensweise ist es, dass für die Simulation mit Berücksichtigung und ohne Berücksichtigung der physikalischen Effekte der gleiche mathematische Algorithmus verwendet wird. Bei der späteren Differenzbildung der Ergebnisse beider Simulationen werden dadurch Ungenauigkeiten im mathematischen Algorithmus kompensiert. Dies ist umso vorteilhafter, je später in der Verarbeitungskette die Korrektur der Computertomografiedaten erfolgt. Bevorzugt erfolgt daher die Korrektur der Volumendaten und/oder der Oberflächenpunkte selbst. Alternativ können die Solldaten aber auch einer Messung entnommen werden. Hierzu kann beispielsweise eine fehlerarme Computertomografiemessung mit vernachlässigbaren Messfehlern wie die Helix-Tomografie oder eine Langzeittomografie eingesetzt werden. Auch durch den Einsatz von Synchrotronstrahlung ist eine fehlerarme Tomografie möglich. Ein weiteres erfindungsgemäßes Verfahren zur Erzeugung fehlerarmer Computertomografieergebnisse ist weiter unten durch Verwendung einer verschiebbaren Blendenanordnung beschrieben. Eine weitere Alternative ist die Messung des Messobjektes mit einem weiteren Sensor. Auch kann das CAD-Modell selbst als Solldatensatz zugrunde gelegt werden.

Vorteil dieser alternativen Vorgehensweise ist es, dass bei Vergleich der Simulationsdaten und der Solldaten, sämtliche Ungenauigkeiten erfasst werden, die durch alle Prozesse verursacht werden, die in die Simulation einbezogen werden. Dies sind also nicht nur die gegebenenfalls gesondert simulierten physikalischen Effekte, sondern auch die normalen Verarbeitungsschritte bei der Computertomografie und die dabei auftretenden Ungenauigkeiten, also Einflüsse der Sensorik und der mathematischen Verarbeitungsschritte, wie oben bereits erläutert. Für die Simulation wird entweder eine Simulation mit oder ohne Berücksichtigung der physikalischen Effekte verwendet. Im ersten Fall werden alle Effekte gleichzeitig, im zweiten Fall nur die Abweichungen aufgrund der normalen Verarbeitungsschritte bei der Computertomografie erfasst. Ist also beispielsweise die Korrektur der Volumendaten vorgesehen, so umfasst die Simulation auch den Prozess der Rekonstruktion und die dadurch bedingten Abweichungen. Für die Rekonstruktion wird dabei der gleiche mathematische Algorithmus verwendet, der auch zur Auswertung der zu korrigierenden computertomografischen Messung verwendet wird, die also die Rekonstruktionsabweichungen damit in gleicher Weise enthält. Diese Abweichungen im Rekonstruktionsalgorithmus sind also in den Simulationsdaten und den Computertomografiedaten enthalten, in den Solldaten, insbesondere den idealen Solldaten erzeugt aus einem CAD-Modell, jedoch nicht. Durch Vergleich der Solldaten mit den Simulationsdaten werden die Abweichungen der Rekonstruktion ermittelt und von den Computertomografiedaten abgezogen und damit korrigiert. Wird die Bestimmung der Oberflächenmesspunkte in die Simulation mit einbezogen, erfolgt auf gleiche Weise auch die Korrektur der in diesem Verarbeitungsschritt vorliegenden Abweichungen des verwendeten mathematischen Algorithmus. Bevorzugt erfolgt daher die Korrektur möglichst spät in der Verarbeitungskette, also der Volumendaten und/oder der Messpunkte selbst. Wie beispielhaft an den Ungenauigkeiten des Rekonstruktionsalgorithmus gezeigt, werden alle Effekte korrigiert, die von der Simulation erfasst werden, also beispielsweise auch Abweichungen, die bereits bei der Erzeugung der Durchstrahlungsbilder entstehen, wie die bereits genannten Fehler der Sensorik. Bevorzugt wird als Solldatensatz ein ideales Modell, vorzugsweise CAD-Modell verwendet. Wird als Modell eine fehlerarme Computertomografiemessung verwendet, ist dennoch eine nur leicht ungenauere Korrektur möglich.

Durch Vergleich der Daten, vorzugsweise Simulationsdaten, mit und ohne Berücksichtigung der physikalischen Effekte werden die Korrekturdaten zur Korrektur der jeweils simulierten physikalischen Effekte berechnet. Dies kann, wie bereits erwähnt, am Durchstrahlungsbild, an den jeweils daraus rekonstruierten Volumendaten oder den wiederum aus den Volumendaten jeweils ermittelten Koordinaten der Oberflächenpunkte erfolgen. Insbesondere sieht eine erfindungstechnische Lösung vor, dass anstatt der Simulation ohne Berücksichtigung der physikalischen Effekte, die Solldaten, beispielsweise das CAD-Modell, bzw. aus diesen errechnete Oberflächenpunkte bzw. Volumendaten, direkt verwendet werden. Bei der Korrektur der Koordinaten ist die Verwendung einer STL-Darstellung (vernetzte Darstellung der 3D-Punkte, STL- Standard Triangulation Language) möglich.

Um die Simulation durchzuführen, müssen zunächst Solldaten, also ein Modell des Messobjektes, das dem eigentlichen Messobjekt zumindest grob entspricht, vorliegen. Dies wird durch die CAD-Daten oder andere Nominal-Daten, vorzugsweise in STL-Darstellung gebildet. Alternativ wird eine bereits erfolgte, und vorzugsweise bereits korrigierte, Computertomografiemessung oder eine Messung mit einem weiteren Sensor verwendet, um die Solldaten für die Simulation festzulegen. Erwähntermaßen können auch die Messdaten einer anderen fehlerarmen bzw. fehlerfreien Computertomografiemessung verwendet werden.

Zur Lösung der Aufgabe sieht die Erfindung u. a. auch vor, dass die gemessenen Durchstrahlungsbilder unter Verwendung synthetischer Durchstrahlungsbilder korrigiert werden. Die synthetischen Durchstrahlungsbilder werden dabei aus einer vorab bestimmten oder bekannten Geometrie oder einem Modell der Geometrie berechnet. Diese Geometrie bzw. das Modell der Geometrie entspricht dem Messobjekt zumindest grob. Bei der erfindungsgemäßen Korrektur lediglich der Durchstrahlungsbilder ist zu beachten, dass die bei der weiteren Verarbeitung der Durchstrahlungsbilder auftretenden Fehler nicht korrigiert werden. Insbesondere Ungenauigkeiten, beispielsweise aufgrund der nicht vollständigen mathematischen Umsetzung einer exakten Rekonstruktion der Durchstrahlungsbilder zu einem Voxelvolumen oder aufgrund der nicht vollständig exakten Berechnung der Oberflächenpunkte aus den Voxeldaten, beeinflussen das Messergebnis.

Erfindungsgemäß erfolgt daher die Korrektur der Computertomografiedaten vorzugsweise möglichst spät in der genannten Verarbeitungskette, also durch Korrektur der Voxeldaten und/oder der Oberflächenmesspunkte. Hierdurch wird sichergestellt, dass auch Ungenauigkeiten bei den mathematischen Algorithmen der Rekonstruktion bzw. auch bei der Berechnung der Oberflächenpunkte vermieden oder zumindest vermindert werden.

Die Aufgabe wird auch dadurch gelöst, dass für die Schätzung der Streustrahlung bzw. die Bestimmung der streustrahlfreien niederfrequenten Intensitätsanteile der Durchstrahlungsbilder ein Modell des Messobjektes verwendet wird.

"Zumindest grob entspricht" bedeutet, dass die Geometrie eines Modells der grundlegenden Form des Bauteils entspricht. Im Beispiel eines CAD-Modells treten Abweichungen zwischen der realen Geometrie (IST) und dem CAD-Modell (SOLL) im Bereich der Fertigungsabweichungen auf. Diese liegen im Bereich von kleiner einem Mikrometer bis zu wenigen Millimetern, je nach Herstellungsverfahren und Material. Für die Simulation sind die entsprechenden Abweichungen zulässig. Im Fall einer Vorabmessung mit CT oder einem anderen Sensor treten Abweichungen zwischen kleiner einem Mikrometer und einem Millimeter auf, je nach Genauigkeit der verwendeten Sensorik. Grundlegend dürfen die Abweichungen im Sinne von "grob" größer sein, als die zu korrigierenden Abweichungen der realen Messung. Sie müssen jedoch klein genug sein, um die Form bzw. Geometrie des Bauteils im Rahmen herkömmlicher Herstellungs- oder Messverfahren wiederzugeben. Das Modell sollte maximal um 10%, vorzugsweise um maximal 5%, der Längen vom realen Bauteil abweichen. Die Materialeigenschaften werden bei der Simulation bzw. der Berechnung der synthetischen Durchstrahlungsbilder mit berücksichtigt.

Um synthetische Durchstrahlungsbilder mit den Durchstrahlungsbildern der eigentlichen computertomographischen Messung zu verrechnen, werden synthetische Durchstrahlungsbilder zu allen oder einem Teil der eigentlichen Messung entsprechenden Drehstellungen des Messobjektes ermittelt.

Da sich die Streustrahlung von Drehstellung zu Drehstellung nur langsam ändert, kann Rechenzeit gespart werden, indem Durchstrahlungsbilder nur für einen Teil der der eigentlichen Messung entsprechenden Drehstellungen des Messobjektes ermittelt werden, z.B. nur für jedes 2. oder 4. oder 8. usw. Durchstrahlungsbild, und die fehlenden synthetischen Durchstrahlungsbilder oder zumindest der Streustrahlanteil aus den berechneten benachbarten synthetischen Durchstrahlungsbildern interpoliert werden.

Unter Durchstrahlungsbildern wird jeweils die Gesamtheit der von den Pixeln eines zweidimensionalen Detektors ermittelten Intensitäten verstanden. Diese werden zumeist als Grauwerte angegeben. Bei einer Computertomographie werden mehrere Durchstrahlungsbilder zu einem Voxelvolumen rekonstruiert. Hierbei wird unter anderem eine Logarithmierung der Intensitäten vorgenommen. Die als Folge dieser Operation entstehenden Daten werden auch Projektionen genannt.

Zur Lösung der Aufgabe sieht die Erfindung auch vor, dass die Durchstrahlungsbilder korrigiert werden, wobei die Korrektur durch Überlagerung mit synthetischen Durchstrahlungsbildern erfolgt, die durch Vorwärtsprojektion, und vorzugsweise Filterung, oder durch Simulation der Streustrahlung oder anderer physikalischer Effekte an einer vorab bestimmten oder bekannten Geometrie oder Modell der Geometrie bestimmt wurden, die bzw. das dem Messobjekt zumindest grob entspricht.

Erfindungsgemäß wird das Verfahren in einem Koordinatenmessgerät eingesetzt, da die korrigierten Durchstrahlungsbilder zu einem Voxelvolumen rekonstruiert und aus diesem Oberflächenpunkte bestimmt werden, um dimensionelle Messungen an einem Messobjekt durchzuführen.

In einer ersten Ausgestaltung der Erfindung wird dazu ein Verfahren eingesetzt, bei dem die niedrigen Frequenzanteile aus artefaktfreien Durchstrahlungsbildern, die also nicht von Streustrahlung oder ähnlichen physikalischen Effekten betroffen sind, mit den hohen Frequenzanteilen der gemessenen Durchstrahlungsbilder kombiniert werden. Die artefaktfreien Durchstrahlungsbilder werden dabei mittels eines vorab bestimmten Modells des Messobjektes synthetisiert. Ein Vorteil dieses Verfahrens gegenüber von Simulationsverfahren liegt in der deutlich geringeren Rechenzeit für die während der Synthese durchgeführte Vorwärtsprojektion.

Als synthetische Durchstrahlungsbilder können alternativ die Durchstrahlungsbilder einer Messung verwendet werden, die nahezu fehlerfrei ist. Entsprechende fehlerarme Computertomografieverfahren sind bereits oben beschrieben.

Die Anwendung dieses Verfahrens zur Streustrahlungskorrektur beruht auf dem Prinzip, dass der Anteil der Streustrahlung in den gemessenen Intensitäten der Durchstrahlungsbilder ein niederfrequentes Signal ist, wie beispielsweise in der Veröffentlichung Kyriakou et al, "Technical note: comparing coherent and incoherent scatter effects for cone-beam CT", in Phys. Med. Biol. 53 (2008) (S. 175-185) gezeigt wird. Diese Annahme gilt nur im Intensitätsraum. Sowohl im Projektionsraum als auch in rekonstruierten CT Bildern (sogenanntes Voxelvolumen) führt das Vorhandensein von Streustrahlung zu hochfrequenten Anteilen. In rekonstruierten CT Bildern macht sich Streustrahlung zum Beispiel durch dunkle Streifen zwischen Objekten hoher Schwächung bemerkbar. Da die Entstehung der Streustrahlung ein statistischer Prozess ist und die Flugrichtungen der Streuphotonen von den Wahrscheinlichkeitsdichtefunktionen für die Streuwinkelverteilung (differentieller Wirkungsquerschnitt) von Rayleigh und Compton Streuung abhängt, gibt es keine ausgezeichneten Streurichtungen. Aus diesem Grund zeigt die Intensitätsverteilung der Streustrahlung in den Durchstrahlungsbildern keine scharfen Kanten sondern ist ein niederfrequentes Signal. Die hochfrequenten Anteile im gemessenen Intensitätssignal beinhalten die Kanteninformationen des Objekts und damit die Informationen über die geometrischen Abmessungen. Damit ergibt sich folgende Möglichkeit, um den Streustrahlanteil aus den gemessenen Intensitäten der Durchstrahlungsbilder zu entfernen:
Hochpassfilter (HP) auf gemessene Intensitäten der Durchstrahlungsbilder anwenden. Das hochpassgefilterte Signal enthält nun idealerweise keine Streustrahlanteile mehr. Dies ist aber nur im Idealfall so.
- Die niederfrequenten Informationen des gemessenen Objekts werden nun mit Hilfe von Vorinformationen über das Objekt generiert. Diese Informationen können zum Beispiel durch Vorwärtsprojektion aus einem CAD-Modell des Objektes erzeugt werden. Diese vorwärtsprojizierten Intensitätswerte der Durchstrahlungsbilder (sogenannte synthetische Durchstrahlungsbilder) werden nun mit einem Tiefpass (TP) gefiltert.
- Anschließend wird der hochfrequente Anteil der gemessenen Intensitäten der Durchstrahlungsbilder zu dem niederfrequenten Anteil aus der Vorwärtsprojektion addiert. Aus den so korrigierten Intensitäten der Durchstrahlungsbilder, also den korrigierten Durchstrahlungsbildern, können nun streustrahlkorrigierte CT Bilder oder Volumen (das sogenannte Voxelvolumen) rekonstruiert werden.
- Zwischen den Intensitäten, die unter Verwendung von Vorinformationen über das Objekt erzeugt wurden und den gemessenen Intensitäten können Unterschiede entstehen, die nicht auf die Streustrahlung zurückzuführen sind. Zum Beispiel durch leichte geometrische Abweichungen zwischen Modell-Geometrie und Messung. Diese Abweichungen können mit Hilfe eines Medianfilters reduziert werden. Hierzu ist eine leicht geänderte, aber mathematisch gleichwirkende Vorgehensweise notwendig. Dabei werden von den gemessenen Durchstrahlungsbildern zunächst die synthetischen Durchstrahlungsbilder abgezogen, also die Intensitäten wie Grauwerte subtrahiert. Die dabei entstehenden Durchstrahlungsbilder werden einer Medianfilterung und anschließend einer Tiefpaßfilterung unterzogen. Die daraus resultierenden Intensitäten werden von den Intensitäten der eigentlichen Durchstrahlungsbilder abgezogen.
- Im letzten Schritt werden aus dem Voxelvolumen die Oberflächenpunkte des Messobjektes, zum Beispiel durch Schwellwertverfahren, bestimmt und daraus Dimensionen bzw. Maße ermittelt.

Da die Korrektur der gemessenen Daten nur im niederfrequenten Bereich auf Intensitätsebene der Durchstrahlungsbilder stattfindet, ergeben sich aus der Korrektur keine Verfälschungen der Geometrie des Objekts.

Es ist daher vorgesehen, dass die synthetischen Durchstrahlungsbilder mittels Vorwärtsprojektion an der bekannten Geometrie oder Modell der Geometrie erzeugt werden und die Intensitäten der synthetischen Durchstrahlungsbilder mit den Intensitäten der entsprechend der Drehstellung zugeordneten, gemessenen Durchstrahlungsbilder verrechnet werden, um die korrigierten Durchstrahlungsbilder zu bestimmen.

In besonderer Ausführung werden dabei die synthetischen Durchstrahlungsbilder tiefpaßgefiltert und die gemessenen Durchstrahlungsbilder hochpaßgefiltert und anschließend die Intensitäten addiert. Alternativ werden von den gemessenen Durchstrahlungsbildern zunächst die synthetischen Durchstrahlungsbilder abgezogen, also die Intensitäten wie Grauwerte subtrahiert, wobei die dabei entstehenden Durchstrahlungsbilder gefiltert werden, in Erweiterung der ersten Vorgehensweise durch zusätzliche Medianfilterung und anschließender Tiefpaßfilterung, und anschließend die resultierenden Intensitäten, zur Korrektur der gemessenen Durchstrahlungsbilder, von den Intensitäten der gemessenen Durchstrahlungsbilder abgezogen werden.

In einer weiteren erfinderischen Idee werden die synthetischen Durchstrahlungsbilder durch Simulation der Streustrahlung und/oder der anderen physikalischen Effektebestimmt.

Bei diesem erfindungsgemäßen Verfahren erfolgt die Korrektur der Durchstrahlungsbilder also anhand einer Simulation, unter Berücksichtigung einer vorab bestimmten bzw. bekannten Geometrie bzw. eines Modells der Geometrie eines Messobjektes, das das eigentliche Messobjekt ist oder diesem zumindest grob entspricht.

Mit anderen Worten erfolgt die Simulation also an einem Modell des eigentlichen Messobjektes, welches noch relativ ungenau sein kann, also nicht der genauen Geometrie des eigentlichen Messobjektes entsprechen muss. Die geringen Abweichungen zwischen dem Modell und dem eigentlichen Messobjekt beeinflussen die eigentliche Simulation nur in sehr geringem Maße, wodurch die Simulationsergebnisse zur Korrektur der computertomografischen Messung des Messobjektes eingesetzt werden können.

Ebenso beeinflussen die geringen Abweichungen zwischen dem Modell und dem eigentlichen Messobjekt die Bestimmung der tiefpaßgefilterten Anteile der synthetischen Durchstrahlungsbilder nicht signifikant.

Anhand der vorab bestimmten Modelldaten erfolgt nun eine Simulation der computertomografischen Abbildung, inklusive der Berücksichtigung der Entstehung von Streustrahlung. Hierfür werden stochastische Simulationsmethoden, vorzugsweise Monte Carlo-Simulationsmethoden eingesetzt. Diese lassen sich neben der Streustrahlung auch auf andere physikalische Effekte, wie Strahlaufhärtung, Nachleuchteffekte oder Ähnliches anwenden. Letztgenannte Effekte können aber auch durch analytische Simulation dargestellt werden. Als Ergebnis der Simulation stehen theoretische bzw. synthetische Durchstrahlungsbilder zur Verfügung, in denen die Abschwächungseffekte der idealen Tomografie und die Streustrahlungseffekte bzw. weiteren physikalischen Effekte überlagert sind. Im Gegensatz zur realen Messung können jedoch die Effekte getrennt werden und die Streustrahlungseffekte bzw. weiteren physikalischen Effekte separiert werden.

Für die verschiedenen Durchstrahlungsbilder in den verschiedenen Drehstellungen steht also im Endergebnis der Simulation zum Beispiel der Einfluss der Streustrahlung in Form von Korrekturbildern zur Verfügung, welche vorzugsweise durch Differenzbildung der Simulation mit Streustrahlung zur Simulation ohne Streustrahlung gebildet werden. Die Grauwerte (Intensitäten) dieser Korrekturbilder werden dann von den Grauwerten (Intensitäten) der Durchstrahlungsbilder der eigentlichen Computertomografie-Messung in der jeweilig zugeordneten Drehstellung abgezogen. Ergebnis dieser Operation ist dann ein von den Effekten der Streustrahlung korrigiertes Durchstrahlungsbild bzw. Durchstrahlungsbilder der realen Computertomografie-Messung. Nach Rekonstruktion dieser korrigierten Durchstrahlungsbilder steht ein korrigiertes Voxelvolumen zur Verfügung, an dem Oberflächenpunkte bestimmt werden können.

In der erfindungsgemäßen Ausgestaltung werden wahlweise die Durchstrahlungsbilder und/oder die daraus errechneten Volumendaten und/oder die Koordinaten der wiederum daraus ermittelten Oberflächenpunkte korrigiert. Hierbei wird die Korrektur jeweils durch Differenzbildung der Messdaten der Simulation unter Berücksichtigung der physikalischen Effekte zu den Messdaten, vorzugsweise erzeugt durch Simulation, ohne Berücksichtigung der physikalischen Effekte ermittelt. Die unterschiedlichen physikalischen Effekte können dabei auch einzeln simuliert werden und jeweils die Differenz zu den idealen Messdaten ohne physikalische Effekte bestimmt werden. Für die Simulation werden die hier nicht näher erläuterten und bereits genannten stochastischen Methoden, vorzugsweise Monte Carlo-Simulationsmethoden oder analytische Simulationsmethoden eingesetzt. Die fehlerfreien bzw. nahezu fehlerfreien Solldaten werden auf verschiedenen Wegen zur Verfügung gestellt. Sie können ebenso simuliert werden, oder einer Messung, beispielsweise Computertomografiemessung oder Messung mit einem weiteren Sensor, mit zumindest vernachlässigbaren Fehlern entnommen werden.

Das für die Simulation der Streustrahlung und anderer Effekte wie Strahlaufhärtung und Nachleuchten bzw. die Vorwärtsprojektion allgemein benötigte Modell besteht beispielsweise aus einem bereits vorhandenen Voxelvolumen, z. B. aus einer Vorabmessung eines Messobjektes ähnlicher Geometrie in ähnlicher Position, wie dies für die Messung des eigentlichen Messobjektes erfolgen soll. Es kann sich dabei beispielsweise um eine aufwändigere Messung handeln, bei der durch andere Maßnahmen der Einfluss der Streustrahlung verhindert oder vermindert wurde. Eine erfindungsgemäße Möglichkeit ist der Einsatz einer Blendenanordnung. Das Modell kann jedoch alternativ auch ein CAD-Modell des Messobjektes oder ein daraus abgeleitetes Oberflächenmodel, zum Beispiel ein Oberflächennetz in STL-Darstellung (STL-Standard triangulation language) sein. Die Information des Voxelvolumens und des CAD-Modells können auch gemeinsam verwendet werden.

In bevorzugter Ausführung stammen die Informationen zum Modell aus einer ersten Rekonstruktion von Volumendaten, wobei vorzugsweise eine Binarisierung bzw. Diskretisierung dieser Volumendaten vorgenommen wird, also eine Trennung in Material und Umgebung. Liegen mehrere Materialien vor, werden entsprechend mehr Quantisierungswerte für die Diskretisierung verwendet. Das aus den Volumendaten abgeleitete Oberflächenmodell in STL-Darstellung wird alternativ verwendet.

In einer weiteren bevorzugten Ausführung wird auch das CAD-Model in Form einer Binarisierung, bzw. Diskretisierung bei mehreren Materialien, als Modell verwendet.

Ebenso ist zur Generierung eines vorbestimmten Modells eine Messung eines ähnlichen Messobjektes, wie eines Meisterteils, mit einem beliebigen Sensor möglich. Vorzugsweise wird hierfür der Computertomografie-Sensor eingesetzt, wobei das Bauteil (Meisterteil) in gleicher Messobjektlage wie die eigentliche Messung des Messobjektes vorliegt. Es können aber auch Sensoren anderer Wirkprinzipe verwendet werden, um das Modell zu erzeugen.

In bevorzugter Ausgestaltung der Erfindung erfolgt die Vorabbestimmung der Geometrie bzw. Modell der Geometrie durch mehrfache computertomografische Messung des Messobjektes, in verschiedenen Stellungen einer verschiebbaren Blendenanordnung, vorzugsweise gebildet durch Schlitze oder Gitter, mit zumindest einer, bevorzugt zumindest zweier, vorzugsweise schlitzförmigen oder gitterförmigen, Blendenöffnung bzw. Blendenöffnungen zwischen der Strahlenquelle und dem Messobjekt und/oder zwischen dem Messobjekt und dem Detektor. Alternativ dazu wird das Messobjekt in verschiedene Stellungen zu einer festen Blendenanordnung gemessen.

Jede der mehreren computertomografischen Messungen des Messobjektes zur Vorabbestimmung der Geometrie bzw. Modells der Geometrie, wird erfindungsgemäß zur Zeiteinsparung mit einer jeweils bezüglich der eigentlichen Messung des Messobjektes reduzierten Anzahl von Drehstellungen des Messobjektes durchgeführt, mit vorzugsweise maximal der Hälfte der Drehstellungen, vorzugsweise verteilt über den gesamten oder etwa den halben Bereich der Drehstellungen.

Ein weiterer erfindungsgemäßer Gedanke besteht darin, die Effekte der Streustrahlung zu minimieren, indem die Auswirkung der Streustrahlung auf das Durchstrahlungsbild bei der eigentlichen Messung reduziert wird. Hierzu ist dem Fachmann bekannt, lediglich einen sehr schmalen, also dünnen Bereich bzw. Schicht des Messobjektes in jeweils mehreren Drehstellungen zu messen (sogenannte Fächerstrahltomografie bzw. fan beam tomography). Hierzu werden beispielsweise zeilenförmige Detektoren verwendet, die jeweils immer nur eine dünne Scheibe (Schicht) des Messobjektes erfassen. Der gleiche Effekt kann erzielt werden, indem eine schlitzförmige oder gitterförmige Blendenöffnung in den Strahlengang eingebracht wird, und nur die direkt in Abbildungsrichtung hinter dem Schlitz vorhandenen Elemente des Detektors ausgewertet werden oder Zeilendetektoren verwendet werden. Diese Vorgehensweise führt jedoch dazu, dass das Messobjekt in sehr vielen verschiedenen Stellungen zur Computertomografie-Sensorik gemessen werden muss, um eine vollständige Messung des Messobjektes zu ermöglichen, da jeweils nur eine Schicht gemessen wird. Die Blende besteht aus einem Röntgenstrahlung nahezu vollständig absorbierenden Material, beispielsweise mit einer Ordnungszahl > 79, wie beispielsweise Wolfram bzw. Wolframlegierungen.

Es soll eine möglichst schnelle Messung des gesamten Bauteils ermöglicht werden, wobei die durch die Streustrahlung entstehenden Auswirkungen vermindert werden.

Es kann eine Blendenanordnung mit mehreren schlitzförmigen oder gitterförmigen Blendenöffnungen eingesetzt werden, wobei je Messung mehrere Schichten des Messobjektes gemessen werden. Durch Verschieben der Blende oder des Bauteils und erneutes Messen mit der gleichen Blendenanordnung kann die Anzahl der Messungen deutlich reduziert werden, die zur Bestimmung aller Schichten, also des kompletten Bauteils, benötigt werden.

Hierzu wird eine Anordnung vorgeschlagen, welche mehrere schlitzförmige Blendenöffnungen in einer Anordnung kombiniert. Diese schlitzförmigen Blendenöffnungen sind vorzugsweise parallel zueinander versetzt angeordnet und enthalten schmale lange Schlitze.

Die Anordnung enthält zudem Mittel zur Verschiebung dieser Blendenanordnung in mehrere Relativpositionen zum Messobjekt, alternativ kann also auch das Messobjekt verschoben werden. Die verschiedenen Blendenpositionen liegen dabei vorzugsweise auf einer Kreisbahn um den Fokuspunkt der Strahlenquelle, auch Brennfleck genannt, damit gleiche Strahlrichtungsverhältnisse in den verschiedenen Teilmessungen vorliegen, insbesondere die Schlitze immer in gleicher Winkelausrichtung zur Strahlrichtung der sie durchsetzenden Messstrahlung stehen und damit gleiche Abschwächung der Röntgenstrahlung vorliegt. Wird die Blendenanordnung für die nächste Messung auf dieser Kreisbahn um einen entsprechenden Winkel weitergedreht, so wird gewährleistet, dass die in der vorherigen Messung beleuchteten Bereiche nicht beleuchtet werden und die jeweils zu beleuchtenden Bereiche aus den Teilmessungen bündig aneinander anschließen. Dies gilt analog bei der Bewegung des Messobjektes.

Es können ebene Blendenanordnungen eingesetzt werden. Vorzugsweise werden jedoch gekrümmte Blendenanordnungen, z. B. in Form eines Zylindersegmentes oder Kugelsegmentes eingesetzt, damit die Dicke der Blendenanordnung in Strahlrichtung in allen Bereichen und in allen Stellungen der Blendenanordnung in den verschiedenen Teilmessungen gleich bleibt.

Eine Ausgestaltung, die nicht Teil der beanspruchten Erfindung ist, zeichnet sich dadurch aus, dass die Korrekturdaten durch Differenzbildung ermittelt werden aus einem ersten Datensatz, der die durch die jeweiligen physikalischen Effekte bedingte Messabweichungen enthält und einem zweiten Datensatz, der frei von den durch die jeweiligen physikalischen Effekte bedingten Messabweichungen ist, wobei vorzugsweise beide Datensätze jeweils aus einem Solldatensatz wie einem Modell, vorzugsweise CAD-Modell, oder einem Messdatensatz des gleichen Messobjektes abgeleitet werden.

In einer besonderen Ausführung der Erfindung sind die zu korrigierenden Messdaten:
- die Durchstrahlungsbilder, die anschließend zu Volumendaten rekonstruiert werden und zur Berechnung korrigierter Oberflächenpunkte verwendet werden und/oder
- bevorzugt die Volumendaten, die anschließend zur Berechnung korrigierter Oberflächenpunkte verwendet werden und/oder
- besonders bevorzugt die Koordinaten des einen oder der mehreren Oberflächenpunkte, ermittelt aus den Volumendaten.

Die Erfindung zeichnet sich in einer Ausgestaltung dadurch aus, dass zur Korrektur wahlweise physikalische Effekte wie Strahlaufhärtung, Streustrahlung, Kegelstrahleffekte, Partialvolumen- bzw. Teilvolumeneffekte, Abtasteffekte beispielsweise erzeugt durch unterschiedliche Empfindlichkeiten der Detektorkanäle, Nachleuchteffekte, Drehachsen-Artefakte bzw. Dreharten-Artefakte, der Einfluss von Störfeldern oder metallischen Implantaten und/oder Messfeldüberschreitungen simuliert werden und vorzugsweise zusätzlich die ideale Computertomografiemessung ohne Messfehler aufgrund physikalischer Effekte, vorzugsweise durch Parallelstrahlabbildung simuliert, bestimmt wird.

Insbesondere ist vorgesehen, dass die Simulation der physikalischen Effekte erfolgt durch Erzeugung synthetischer Durchstrahlungsbilder anhand von:
- 2D- oder 3D-Solldaten, vorzugsweise CAD-Daten, des Messobjekts und/oder
- 3D-Nominal-Daten im STL-Format, vorzugsweise erzeugt aus den Solldaten und/oder
   3D STL-Daten des Messobjekts, ermittelt aus einer bereits korrigierten oder einer unkorrigierten Vorabmessung mit dem Computertomografiesensor und/oder einem weiteren Sensor
- Messdaten einer Computertomografie mit vernachlässigbaren Messfehlern wie Langzeittomografie, Helixtomografie, Tomografie mit Synchrotronstrahlung oder Computertomografie unter Verwendung einer verschiebbaren Blendenanordnung.

Es ist vorgesehen ein Computertomografie-Verfahren zur dimensionellen Bestimmung von Merkmalen an einem Messobjekt, das in mehreren Drehstellungen von einer Strahlung durchstrahlt wird, wobei durch die Streustrahlung oder andere physikalische Effekte bedingte Messabweichungen korrigiert werden, indem die Durchstrahlungsbilder unter Verwendung synthetischer Durchstrahlungsbilder, berechnet aus einer vorab bestimmten oder bekannten Geometrie oder einem Modell der Geometrie, korrigiert werden, wobei die Geometrie bzw. das Modell der Geometrie dem Messobjekt zumindest grob entspricht.

Weitere Einzelheiten, Vorteile und Merkmale der Erfindung ergeben sich nicht nur aus den Ansprüchen, den diesen zu entnehmenden Merkmale sondern auch aus der nachfolgenden Beschreibung der Zeichnungen.

Es zeigen:
- Fig. 1: ein Flussdiagramm eines Verfahrens zur Simulation der Streustrahlung oder anderer physikalischer Effekte an einem vorab bestimmten Modell gemäß der Erfindung,
- Fig. 2: ein Flussdiagramm zur Verdeutlichung einer Korrektur der eigentlichen Messung mit Hilfe von Simulationsdaten,
- Fig. 3: eine Anordnung zur Streustrahlungsverringerung mit einer flachen Blendenanordnung in einer ersten Stellung,
- Fig. 4: die Anordnung zur Streustrahlungsverringerung mit einer flachen Blendenanordnung in einer zweiten Stellung,
- Fig. 5: eine alternative Ausgestaltung einer flachen Blendenanordnung,
- Fig. 6: eine Anordnung zur Streustrahlungsverringerung mit einer flachen Blendenanordnung in einer ersten und einer zweiten Stellung,
- Fig. 7: eine weitere Anordnung zur Streustrahlungsverringerung mit einer gekrümmten Blendenanordnung in einer ersten Stellung,
- Fig. 8: ein Flussdiagramm eines zweiten erfindungsgemäßen Verfahrens zur Erzeugung synthetischer Durchstrahlungsbilder und zur Korrektur von Streustrahlung und
- Fig. 9: ein Flussdiagramm eines dritten erfindungsgemäßen Verfahrens zur Erzeugung synthetischer Durchstrahlungsbilder und zur Korrektur von Streustrahlung.

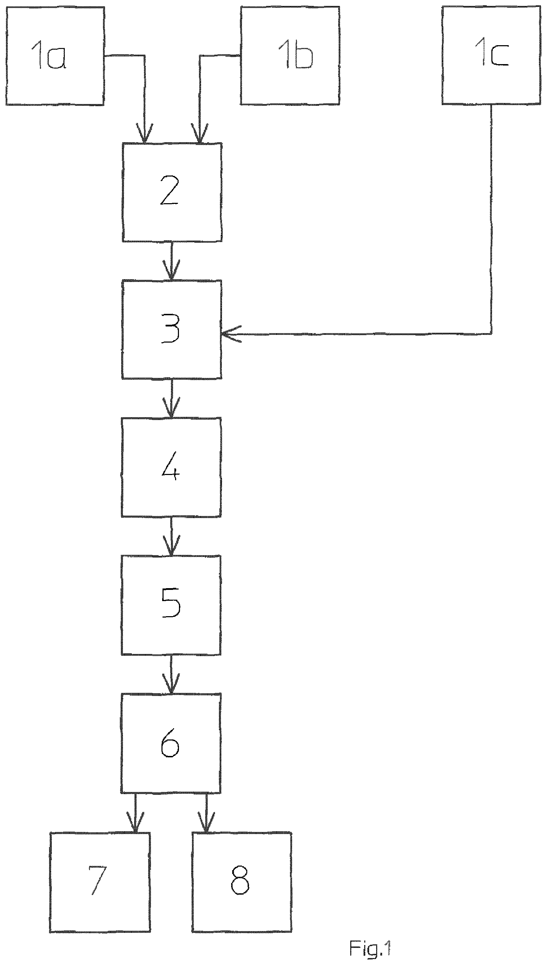

In der Fig. 1 ist eine Simulation einer Streustrahlung nach der erfindungsgemäßen Lehre schematisch dargestellt. Diese umfasst die folgenden Schritte:
1a - Zumindest grobe Vorabbestimmung des Voxelvolumens eines Meisterteils oder des Messobjektes mittels computertomografischer Aufnahme von Durchstrahlungsbildern und Rekonstruktion des Voxelvolumens, wobei die Effekte der Streustrahlung in das Ergebnis eingehen
1b - Zumindest grobe Definition des Messobjektes durch Verwendung der Sollgeometrie anhand des CAD-Modells des Messobjektes
1c - Zumindest grobe Vorabbestimmung der Oberfläche eines Meisterteils oder des Messobjektes mittels Computertomografie oder mittels eines anderen Sensors, wobei Messpunkte auf der Oberfläche ermittelt werden und wobei die Streustrahlung im Falle des Einsatzes der Computertomografie das Ergebnis beeinflusst
2 - Binarisierung der Voxeldaten aus la oder der CAD-Daten aus 1b bzw. Diskretisierung mit mehreren Quantisierungsintervallen bei Messobjekten aus mehreren Materialien
3 - Bildung eines Modells aus den Daten aus 2 oder aus den Oberflächendaten aus 1c. Die Darstellung der Oberfläche erfolgt zum Beispiel in vernetzter Darstellung als STL-Datensatz.
4 - Einlesen der Modelldaten in eine Simulationssoftware
5 - Simulation der idealen Durchstrahlung (Primärstrahlung) und der Streustrahlung (Sekundärstrahlung) mittels Monte-Carlo-Simulation, indem jeder durch Simulation bestimmte, gestreute Strahlanteil als neuer Strahl (Sekundärstrahl) im Sinne einer Vorwärtsprojektion weiterverfolgt wird, also entsprechend des Modells die Schwächung durch das Messobjekt und die Abbildung auf dem Detektor (Durchstrahlungsbild) sowie gegebenenfalls weitere Streuung simuliert wird. Alternativ oder zusätzlich zur stochastischen Simulation der Primärstrahlung bezüglich des Streustrahlungsanteiles werden durch analytische Simulation und Vorwärtsprojektion, basierend auf dem Modell, weitere physikalische Effekte wie Strahlaufhärtung oder Nachleuchten berücksichtigt. Alternativ zur Simulation der idealen Durchstrahlung können die entsprechenden Durchstrahlungsbilder auch einer Messung mit vernachlässigbaren Fehlern oder einem bereits vorhandenen Solldatensatz wie beispielsweise gebildet aus einem CAD-Modell entnommen werden.
6 - Ermittlung der Durchstrahlungsbilder für n verschiedene Drehstellungen als Ergebnis der Simulation, wobei die Durchstrahlungsbilder die Grauwerte enthalten, welche durch Primär- und Sekundärstrahlen simuliert wurden.
7 - Separierung der Durchstrahlungsbilder, die nur durch die Sekundärstrahlen simuliert wurden. Die Intensitäten I_1..n_S (S-Sekundärstrahl) der n Durchstrahlungsbilder werden gespeichert.
8 - Separierung der Durchstrahlungsbilder, die nur durch die Primärstrahlen simuliert wurden. Die Intensitäten I_1..n_P (P-Primärstrahl) der n Durchstrahlungsbilder werden gespeichert.

Die Schritte 6-8 sind nur symbolisch aufgenommen. Im Simulationsergebnis liegen die simulierten Durchstrahlungsbilder für Primär- und Sekundärstrahlen bereits getrennt vor.

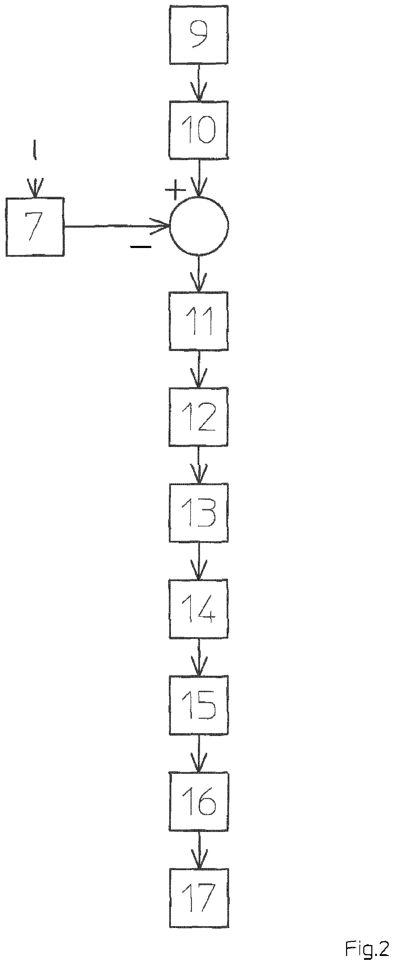

Figur 2 zeigt die Korrektur der eigentlichen computertomographischen Messung mit Hilfe der Simulationsdaten I_1..n_S. Sie umfasst die folgenden Schritte:
9 - das Messobjekt wird computertomografisch erfasst, also n Durchstrahlungsbilder mit den Intensitäten I'_1..n in den n verschiedenen Drehstellungen aufgenommen
10 - Die Intensitäten I'_1..n werden gespeichert, wobei diese die durch die Messung nicht trennbaren Anteile der Primärstrahlen I'_1..n_P und der Sekundärstrahlen I'_1..n_S enthalten, es gilt also für die Messung: I'_1..n = I'_1..n_P+ I'_1..n_S
11 - Unter Verwendung der in Schritt 7 simulierten Streustrahlung, also den Intensitäten I_1..n_S der Sekundärstrahlen, werden aus den gemessenen Durchstrahlungsbildern mit den Intensitäten I'_1..n die korrigierten Durchstrahlungsbilder I"_1..n berechnet, indem die Intensitäten I_1..n_S der Sekundärstrahlen in den jeweils der gleichen Drehstellung zugeordneten Durchstrahlungsbildern abgezogen werden, es gilt also: I"_1..n = I'_1..n - I_1..n_S = I'_1..n_P+ I'_1..n_S - I_1..n_S
   Im Ergebnis liegen nun die, um die simulierte Streustrahlung korrigierten Durchstrahlungsbilder mit den Intensitäten I"_1..n vor.
12 - Rekonstruktion der korrigierten Durchstrahlungsbilder
13 - Speicherung des korrigierten, rekonstruierten Voxelvolumens
14 - Berechnung von korrigierten Oberflächenpunkten aus dem korrigierten Voxelvolumen, beispielsweise durch Schwellwertverfahren
15 - Speicherung der korrigierten Oberflächenpunkte
16 - Verknüpfung der korrigierten Oberflächenpunkte zur Berechnung von Maßen
17 - Speicherung und gegebenenfalls Ausgabe der berechneten Maße

Im Ergebnis liegen nur Maße vor, die auf der Basis von um die simulierte Streustrahlung korrigierten Durchstrahlungsbildern berechnet wurden. Dadurch wird der Einfluss der Streustrahlung deutlich verringert. Restabweichungen entstehen lediglich durch die ungenaue Simulation der Streustrahlung aufgrund des nur grob bestimmten Modells.

Die in den Figuren 1 und 2 beispielhaft durch Berücksichtigung der Primär und Sekundärstrahlung ermittelte Korrektur wird erfindungsgemäß auch in den Volumendaten und/oder den Oberflächenmesspunkten durchgeführt. Hierzu werden die simulierten Durchstrahlungsbilder, welche von den physikalischen Effekten beeinflusst sind, zum Voxelvolumen rekonstruiert bzw. daraus Oberflächenmesspunkte generiert. Als Vergleichsdaten, die frei von den physikalischen Effekten sind, also rein durch die Primärstrahlung erzeugt werden, dienen entweder die Volumendaten bzw. daraus ermittelten Oberflächenpunkte, die durch Rekonstruktion der anhand der Primärstrahlung simulierten Durchstrahlungsbilder vorliegen oder durch Rekonstruktion einer bereits erfolgten nahezu fehlerfreien Messung vorliegen. Bei der Korrektur der Koordinaten der Oberflächenmesspunkte können alternativ auch die Messdaten weiterer Sensoren verwendet werden.

Ebenso können als von den physikalischen Effekten unbeeinflusste Vergleichsdaten die Informationen aus einem Solldatensatz wie CAD-Modell verwendet werden. Hierdurch werden Ungenauigkeiten in sämtlichen bis zur Korrektur durchgeführten und somit auch simulierten Verarbeitungsschritten korrigiert.

Erfindungsgemäß erfolgt der Korrekturschritt möglichst spät in der Verarbeitungskette, damit weitere Ungenauigkeiten der Sensorik bzw. der mathematischen Verarbeitungsalgorithmen mit korrigiert werden.

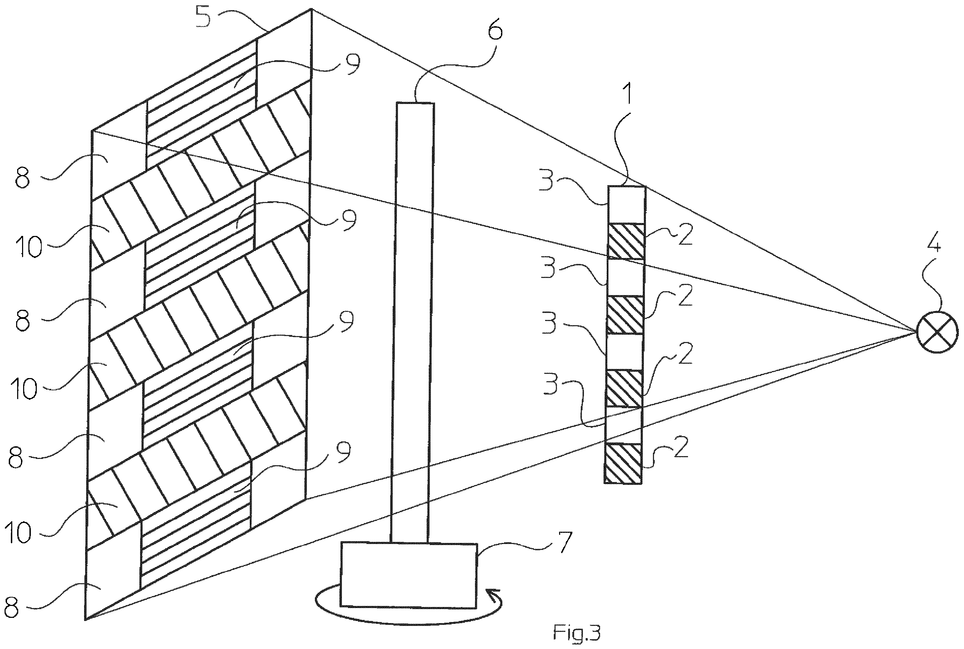

In Fig. 3 wird die erfindungsgemäße Anordnung zur Streustrahlungsverringerung mit einer flachen Blendenanordnung 1 (verkürzt Blende genannt) in einer ersten Stellung dargestellt. Die Blende 1 enthält für die Messstrahlen wie Röntgenstrahlung nicht transparente Bereiche 2, beispielsweise aus einer Wolframlegierung, und transparente Bereiche 3, beispiels weise in Form von Aussparungen und befindet sich im Strahlengang der Strahlenquelle, wie Röntgenstrahlenquelle mit ihrem Fokuspunkt bzw. Brennfleck 4. Die Strahlung wird auf einen Matrixdetektor 5 abgebildet und wird dabei neben der Blendenanordnung 1 durch ein Messobjekt 6 geschwächt. Das Messobjekt 6 befindet sich auf einer Drehachse 7. Im Zuge der computertomographischen Messung werden jeweils in mehreren Drehstellungen der Drehachse 7 von dem Messobjekt 6 Durchstrahlungsbilder mit dem Detektor 5 ausgenommen und zur weiteren Verarbeitung zur Verfügung gestellt.

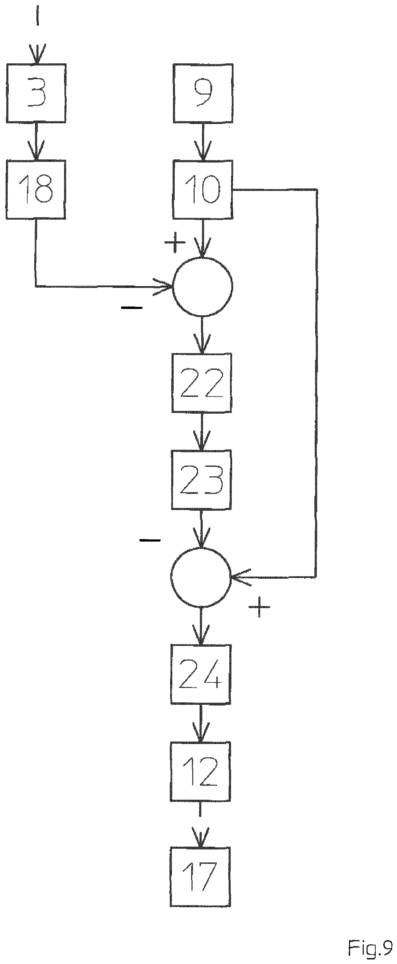

Durch die dargestellte erste Anordnung der Blende 1 wird das Messobjekt nicht vom kompletten Kegelstrahl (cone beam) der von der Strahlenquelle 4 ausgehenden Messstrahlung erfasst, sondern nur von mehreren Fächerstrahlen (fan beams), wodurch nur in Bereichen 8 des Detektors eine Abbildung 9, also geschwächtes Durchstrahlungsbild, entsteht. Bereiche 10 des Detektors sind quasi abgedeckt. Hierdurch ergibt sich der Vorteil, dass eventuell auftretende Streustrahlung, also quer nach oben oder unten abgelenkte Strahlung, auf die abgedeckten Bereiche 10 des Detektors fällt. Da die Bereiche 10 anhand der Stellung der Blende 1 vorab bekannt sind, werden diese Bereiche für die weitere Verarbeitung nicht ausgewertet oder dienen als Mittel zur Abschätzung der aufgetretenen Streustrahlung.

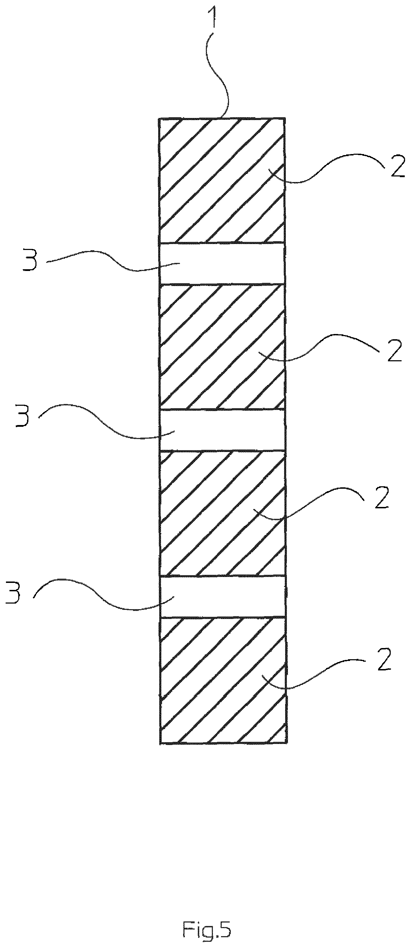

Das Verhältnis der Abmessungen der nicht transparenten Bereiche 2 zu den transparenten Bereichen 3 ist beispielhaft mit 1 gewählt, es sind aber auch höhere Verhältnisse denkbar, wie beispielsweise in Fig. 5 gezeigt.

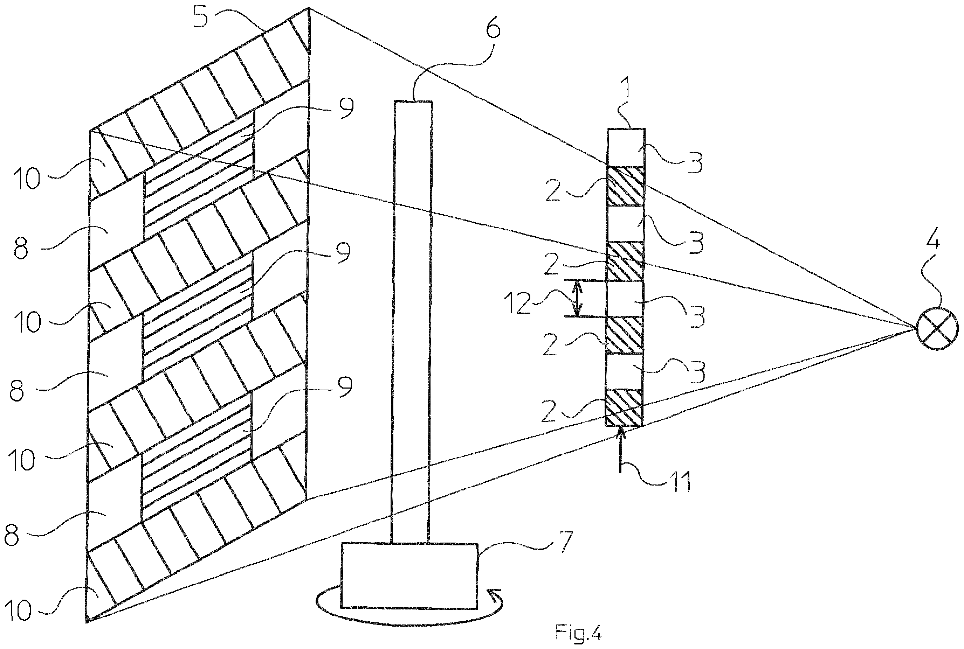

Abhängig von diesem Verhältnis werden weitere Messungen in weiteren Stellungen der Blende 1 durchgeführt, um das Messobjekt 6 vollständig zu erfassen. Wie in Fig. 4 gezeigt, wird die Blende dazu in die in Richtung des Pfeiles 11 verschobene zweite Stellung gebracht. Der Verschiebeweg entspricht dabei der Abmessung, in diesem Fall Höhe der transparenten Bereiche 3, gekennzeichnet durch den Maßpfeil 12. Bei der Wahl des Verhältnisses 1 zwischen den Abmessungen der nicht transparenten Bereiche 2 zu den transparenten Bereichen 3 sind lediglich zwei Stellungen der Blende 1 erforderlich, bei höheren Verhältnissen entsprechend mehr. Ziel ist jeweils, jeden Bereich des Messobjektes 6 zumindest einmal mit der durch die transparenten Bereiche 3 passierenden Messstrahlung zu erfassen. Anhand Fig. 4 ist zu erkennen, dass in der zweiten Stellung der Blende 1 nun die abgedeckten Bereiche 10 und die nicht abgedeckten Bereiche 8 auf dem Detektor verschoben sind und nun genau die Bereiche des Messobjektes durchstrahlt und auf dem Detektor in Bereichen 9 abgebildet werden, die in der ersten Stellung der Blende 1 in Fig. 3 abgedeckt waren. Damit ist das Messobjekt durch zwei Messungen komplett erfasst. Die Durchstrahlungsbilder der beiden Messungen werden wahlweise zusammengesetzt rekonstruiert oder einzeln rekonstruiert und die rekonstruierten Voxelvolumen zusammengesetzt. Analoges Vorgehen ist bei mehr als zwei Messungen möglich.

In Fig. 5 wird eine alternative Blendenanordnung 1 mit erhöhtem Verhältnis der Abmessungen der nicht transparenten Bereiche 2 zu den transparenten Bereichen 3 gezeigt.

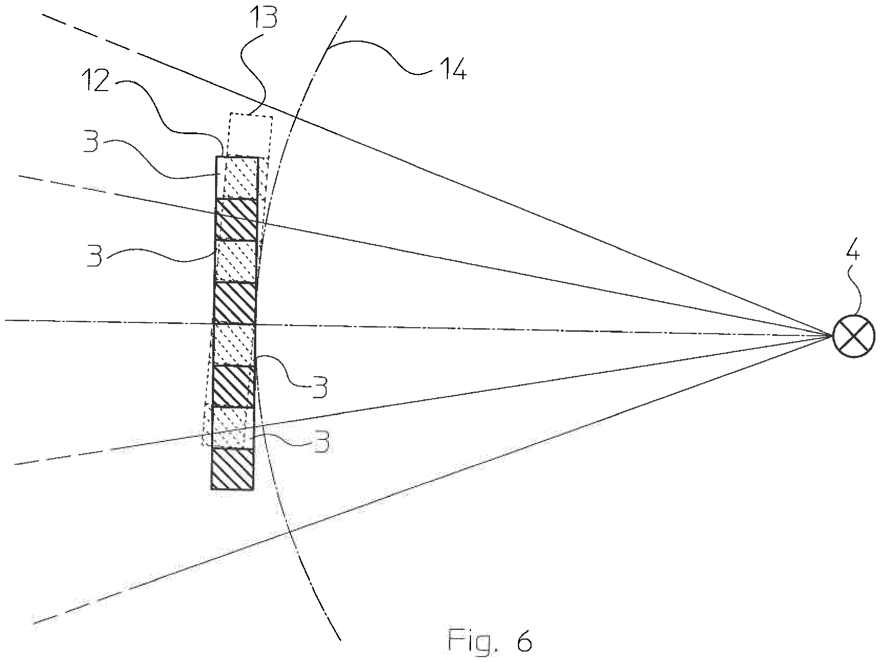

Die Fig. 6 zeigt eine weitere Anordnung zur Streustrahlungsverringerung mit der flachen Blendenanordnung 1 aus Fig. 3 und 4, in einer ersten Stellung 12 (durchgezogene Linien) und einer zweiten Stellung 13 (gestrichelte Linien). Die beiden Stellungen sind hier auf einer Kreisbahn 14 um den Brennfleck 4 um die Abmessung des transparenten Bereiches 3 zueinander verschoben und um den entsprechenden Winkel der Kreisbahnposition verdreht zueinander angeordnet. Hierdurch ergibt sich der Vorteil, dass gleiche Bereiche der Blende 1 jeweils in gleichen Strahlrichtungen durchstrahlt werden, wodurch die Schwächung der Strahlung für die verschiedenen Stellungen der Blende 1 jeweils gleich ist.

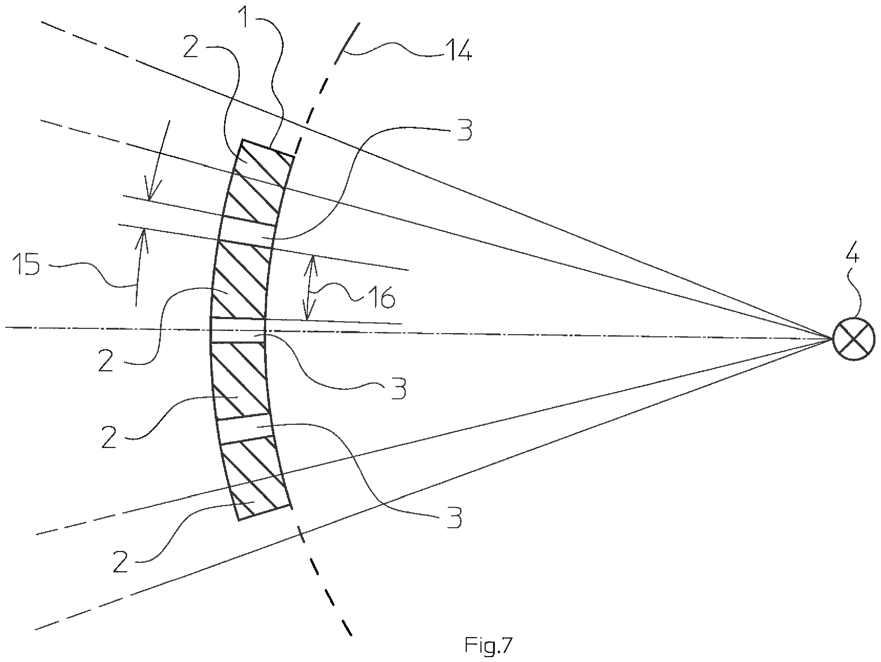

Dieser Vorteil wird anhand der Fig. 7 weiter verstärkt, indem eine gekrümmte Blendenanordnung 1 eingesetzt wird. Diese ist beispielsweise in Form eines Kugelscheibensegmentes um den Brennfleck 4 ausgeführt. In der zweidimensionalen Darstellung der Figur 7 erstreckt sich die Blende 1 also entlang der Kreisbahn 14 um den Brennfleck 4. Hierdurch ist für alle Strahlrichtungen die Dicke der Blende gleich. Dieser Vorteil bleibt auch dann erhalten, wenn die Blende 1 in die weiteren Stellungen, welche nicht dargestellt sind, gebracht wird. Die weiteren Stellungen ergeben sich durch Drehen der Blende 1 um den Brennfleck 4, sodass die Blende 1 stets auf der Kreisbahn 14 angeordnet ist. Die Anzahl der notwendigen Stellungen zur kompletten Erfassung des Messobjektes 6 ergibt sich wiederum aus dem Verhältnis der Abmessungen der nicht transparenten Bereiche 2 zu den transparenten Bereichen 3, hier dargestellt durch die Winkel 16 und 15.

Auch wenn zwar häufig nur von der Korrektur der Streustrahlung die Rede ist, so ist das erfindungsgemäße Verfahren gleichwirkend für jegliche weitere physikalische Störeffekte anwendbar, die durch Simulation abgebildet werden können.

Die Erfindung zielt auf ein Verfahren ab, bei dem die zur richtigen Messung beitragende Messstrahlung (Primärstrahlung) und beliebig geartete Störstrahlung (Sekundärstrahlung) getrennt simuliert wird, um Durchstrahlungsbilder zu erhalten, von denen die der Störstrahlung zugeordneten zur Korrektur der Durchstrahlungsbilder einer realen Messung verwendet werden.

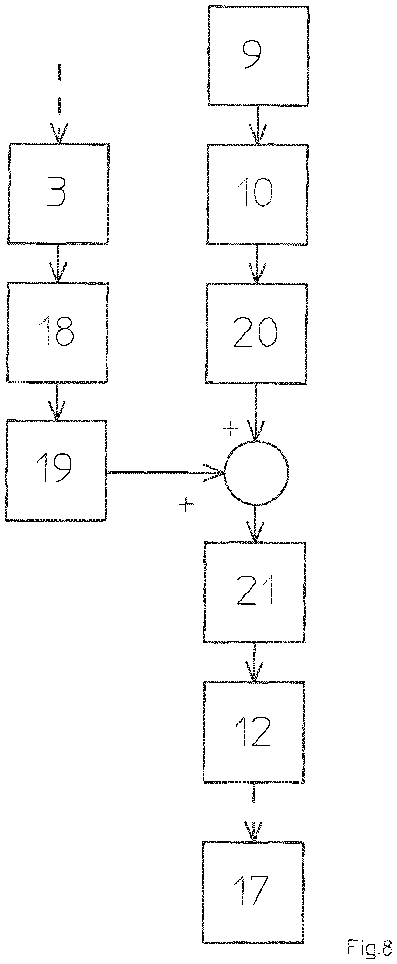

Figur 8 zeigt ein zu den Figuren 1 und 2 alternatives Verfahren. Auf einzelne Teilschritte der Figuren 1 und 2 wird dabei Bezug genommen, indem einige der Bezugszeichen aus der Menge der Bezugszeichen la, 1b, 1c und 2 bis 17 verwendet werden. Die Korrektur der eigentlichen computertomographischen Messung nach Schritt 9 und 10 mit Hilfe synthetischer Durchstrahlungsbilder, berechnet aus den Modelldaten aus Schritt 3 umfasst dabei die folgenden Schritte:
18 - Vorwärtsprojektion einer idealen Durchstrahlung durch das Modell aus Schritt 3 zur Erzeugung von synthetischen Durchstrahlungsbildern
19 - Tiefpassfilterung der synthetischen Durchstrahlungsbilder aus Schritt 18
20 - Hochpassfilterung der Durchstrahlungsbilder der eigentlichen Messung aus Schritt 10 (hierbei wird die niederfrequente Streustrahlung eliminiert)
21 - Ermittlung korrigierter Durchstrahlungsbilder durch Addition der Intensitäten der gefilterten Durchstrahlungsbilder der eigentlichen Messung aus Schritt 20 und den gefilterten synthetischen Durchstrahlungsbildern aus Schritt 19

Die Schritte 12-17 werden analog der Figur 2 zur Bestimmung der Maße am Messobjekt aus den korrigierten Durchstrahlungsbildern aus Schritt 21 durchgeführt.

Figur 9 zeigt ein weiteres zu den Figuren 1 und 2 alternatives Verfahren. Auf einzelne Teilschritte der Figuren 1 und 2 wird wiederum Bezug genommen. Die Korrektur der eigentlichen computertomographischen Messung umfasst dabei die folgenden Schritte:
18 - Vorwärtsprojektion einer idealen Durchstrahlung durch das Modell aus Schritt 3 zur Erzeugung von synthetischen Durchstrahlungsbildern
22 - Medianfilterung der Differenzintensitäten der Durchstrahlungsbilder der eigentlichen Messung aus Schritt 10 und der synthetischen Durchstrahlungsbilder aus Schritt 18 (hierdurch werden verbleibende Kanten besser aus den Durchstrahlungsbildern entfernt, als mit einem Tiefpass)
23 - Tiefpassfilterung der mediangefilterten Durchstrahlungsbilder aus Schritt 22 (hierdurch verbleibt nur noch der niederfrequente Streustrahlungsanteil in den Durchstrahlungsbildern)
24 - Ermittlung korrigierter Durchstrahlungsbilder durch Subtraktion der Intensitäten der gefilterten Durchstrahlungsbilder aus Schritt 23 von den Intensitäten der Durchstrahlungsbilder der eigentlichen Messung aus Schritt 10

Die Schritte 12-17 werden wiederum analog der Figur 2 zur Bestimmung der Maße am Messobjekt aus den korrigierten Durchstrahlungsbildern aus Schritt 24 durchgeführt.

## Patentansprüche

1. Computertomografie-Verfahren zur dimensionellen Bestimmung von Merkmalen an einem Messobjekt (6), umfassend die Verfahrensschritte Durchstrahlen des Messobjekts in mehreren Drehstellungen mit der Strahlung einer Strahlungsquelle (4) und Aufnahmen jeweils zugehöriger 2D-Durchstrahlungsbilder, Berechnen dreidimensionaler Volumeninformationen im Voxelformat aus den 2D-Durchstrahlungsbildern mittels Rekonstruktion, wobei in den Volumeninformationen Daten zur lokalen Strahlabsorption enthalten sind, und Generieren von Oberflächenpunkten aus den Volumeninformationen, vorzugsweise im Bereich von Materialübergängen, wobei vorzugsweise das Verfahren in einem Koordinatenmessgerät eingesetzt wird,
**gekennzeichnet durch**,
Verwendung von Korrekturdaten zur wahlweisen Korrektur physikalischer Effekte der Messdaten der Computertomografiemessung, wobei sich die Korrekturdaten aus der Differenz zwischen Simulationsdaten mit Berücksichtigung der jeweiligen physikalischen Effekte, wie beispielsweise Streustrahlung, Strahlaufhärtung, Kegelstrahlartefakte, und Simulationsdaten oder Solldaten ohne Berücksichtigung der jeweiligen physikalischen Effekte ergeben, wobei die zu korrigierenden Messdaten die Durchstrahlungsbilder und/oder die Volumeninformationen und/oder die Oberflächenpunkte sind.

2. Verfahren nach Anspruch 1,
**dadurch gekennzeichnet,**
**dass** die zu korrigierenden Messdaten:
- die Durchstrahlungsbilder, die anschließend zu Volumeninformationen rekonstruiert werden und zur Berechnung korrigierter Oberflächenpunkte verwendet werden und/oder
- bevorzugt die Volumeninformationen, die anschließend zur Berechnung korrigierter Oberflächenpunkte verwendet werden und/oder
- besonders bevorzugt die Koordinaten des einen oder der mehreren Oberflächenpunkte, ermittelt aus den Volumendaten, sind.

3. Verfahren nach zumindest einem der vorhergehenden Ansprüche,
**dadurch gekennzeichnet,**
**dass** zur Korrektur wahlweise physikalische Effekte, wie Strahlaufhärtung, Streustrahlung, Kegelstrahleffekte, Partialvolumen- bzw. Teilvolumeneffekte, Abtasteffekte, beispielsweise erzeugt durch unterschiedliche Empfindlichkeiten der Detektorkanäle, Nachleuchteffekte, Drehachsen-Artefakte bzw. Dreharten-Artefakte, der Einfluss von Störfeldern oder metallischen Implantaten und/oder Messfeldüberschreitungen simuliert werden und vorzugsweise zusätzlich die Computertomografiemessung ohne Messfehler aufgrund physikalischer Effekte, vorzugsweise durch Parallelstrahlabbildung simuliert, bestimmt wird.

4. Verfahren nach zumindest einem der vorhergehenden Ansprüche,
**dadurch gekennzeichnet,**
**dass** die Simulation der physikalischen Effekte erfolgt durch Erzeugung synthetischer Durchstrahlungsbilder anhand von:
- 2D- oder 3D-Solldaten, vorzugsweise CAD-Daten, des Messobjekts und/oder
- 3D-Nominal-Daten im STL-Format, vorzugsweise erzeugt aus den Solldaten und/oder
- 3D STL-Daten des Messobjekts, ermittelt aus einer bereits korrigierten oder einer unkorrigierten Vorabmessung mit dem Computertomografiesensor und/oder einem weiteren Sensor
- Messdaten einer Computertomografie mit vernachlässigbaren Messfehlern wie Langzeittomografie, Helixtomografie, Tomografie mit Synchrotronstrahlung oder Computertomografie unter Verwendung einer verschiebbaren Blendenanordnung.

5. Computertomografie-Verfahren nach zumindest einem der vorhergehenden Ansprüche,
**dadurch gekennzeichnet,**
**dass** die Durchstrahlungsbilder unter Verwendung synthetischer Durchstrahlungsbilder, berechnet aus einer vorab bestimmten oder bekannten Geometrie oder einem Modell der Geometrie, korrigiert werden, wobei die Geometrie bzw. das Modell der Geometrie dem Messobjekt zumindest grob entspricht.

## Claims

1. Computer tomography method for dimensional determination of features of a measurement object (6), comprising the method steps irradiation of the measurement object in several rotation positions with the radiation of a radiation source (4) and recording of the associated 2D radiographic images, calculation of three-dimensional volume information in voxel format from said 2D radiographic images by means of reconstruction, said volume information containing data on local beam absorption, and generation of surface points from said volume information, preferably in the area of material transitions, the method preferably being used in a coordinate measurement apparatus,
**characterized by**
use of correction data for selective correction of physical effects of the measurement data from the computer tomography measurement, said correction data being obtained from the difference between simulation data taking into account the respective physical effects, for example scatter radiation, beam hardening and cone beam artifacts, and simulation data or target data not taking into account the respective physical effects, the measurement data to be corrected being the radiographic images and/or the volume information and/or the surface points.

2. Method according to claim 1,
wherein
the measurement data to be corrected are:
- the radiographic images, which are then reconstructed into volume information and used for calculation of corrected surface points, and/or
- preferably the volume information, which is then used for calculation of corrected surface points, and/or
- particularly preferably the coordinates of the one or more surface points determined from the volume data.

3. Method according to at least one of the preceding claims,
wherein
for correction selectively physical effects, such as beam hardening, scatter radiation, cone beam effects, partial volume effects, scanning effects for example generated by differing sensitivities of the detector channels, afterglow effects, rotation axis artifacts or rotation type artifacts, the influence of interference fields or metallic implants and/or measurement field overruns are simulated and preferably the computer tomography measurement is additionally determined without measurement errors due to physical effects, preferably simulated by parallel beam imaging.

4. Method according to at least one of the preceding claims,
wherein
the physical effects are simulated by generation of synthetic radiographic images based on:
- 2D or 3D target data, preferably CAD data, of the measurement object and/or
- 3D nominal data in STL format, preferably generated from the target data and/or
- 3D STL data of the measurement object, determined from an already corrected or an uncorrected advance measurement with the computer tomography sensor and/or a further sensor
- measurement data from a computer tomography with negligible measurement errors, such as long-term tomography, helical tomography, tomography with synchrotron radiation or computer tomography using a movable aperture arrangement.

5. Computer tomography method according to at least one of the preceding claims,
wherein
the radiographic images are corrected using synthetic radiographic images calculated from a previously determined or known geometry or from a model of the geometry, said geometry or model of the geometry at least roughly matching the measurement object.

## Revendications

1. Procédé de tomographie assistée par ordinateur, destiné à la détermination de caractéristiques d'un objet à analyser (6), comprenant comme étapes du procédé la radiographie de l'objet à analyser dans plusieurs positions de rotation au moyen du rayonnement d'une source de rayonnement (4) et enregistrement des images radiographiques 2D associées, calcul des informations volumiques tridimensionnelles dans le format voxel à partir des images radiographiques 2D au moyen de la reconstruction, sachant que les informations volumiques contiennent des données sur l'absorption locale du rayonnement, et génération de points de surface à partir des informations volumiques, de préférence dans la zone des transitions de matériau, sachant que de préférence, le procédé est utilisé dans un appareil de mesure de coordonnées,
caractérisé en
l'utilisation de données de correction pour la correction sélective d'effets physiques des données mesurées de la mesure tomographique assistée par ordinateur, sachant que les données de correction résultent de la différence entre les données de simulation avec prise en compte des effets physiques respectifs, tels que rayonnement diffusé, durcissement du faisceau, artefacts de faisceau en éventail, et les données de simulation ou données prévues sans prise en compte des effets physiques respectifs, sachant que les données mesurées à corriger sont les images radiographiques et/ou les informations volumiques et/ou les points de surface.

2. Procédé selon la revendication 1,
**caractérisé en ce,**
**que** les données mesurées à corriger sont :
- les images radiographiques qui sont ensuite reconstruites sous forme d'informations volumiques et sont utilisées pour le calcul des points de surface corrigés et/ou
- de préférence, les informations volumiques qui sont ensuite utilisées pour le calcul des points de surface corrigés et/ou
- en particulier de préférence, les coordonnées dudit un ou desdits plusieurs points de surface, déterminées à partir des données volumiques.

3. Procédé selon au moins une des revendications précédentes,
**caractérisé en ce**
**que** pour corriger sélectivement des effets physiques, tels que rayonnement diffusé, durcissement du faisceau, artefacts de faisceau en éventail, effets de volume partiel, effets de balayage, produits par exemple par différentes sensibilités des canaux de détection, effets de rémanence, artefacts d'axes de rotation ou artefacts de types de rotation, l'influence de champs de perturbation ou d'implants métalliques et/ou de dépassements du champ de mesure est simulée et qu'en plus, de préférence, la mesure tomographique assistée par ordinateur est déterminée sans erreurs de mesure dues aux effets physiques simulés, de préférence, par la projection d'un rayonnement parallèle.

4. Procédé selon au moins une des revendications précédentes,
**caractérisé en ce**
**que** la simulation des effets physiques a lieu en produisant des images radiographiques de synthèse à l'aide de :
- données prévues 2D ou 3D, de préférence de données CAO de l'objet à analyser et/ou
- données nominales 3D au format STL, générées de préférence à partir des données prévues et/ou
- données STL 3D de l'objet à analyser, déterminées à partir d'une mesure préalable déjà corrigée ou non corrigée avec le capteur de tomographie assistée par ordinateur ou un autre capteur
- données mesurées d'une tomographie assistée par ordinateur avec erreurs de mesure négligeables telle que tomographie longue durée, tomographie hélicoïdale, tomographie à rayonnement de synchrotron ou tomographie assistée par ordinateur avec utilisation d'un dispositif d'obturation déplaçable.

5. Procédé de tomographie assistée par ordinateur selon au moins une des revendications précédentes,
**caractérisé en ce**
**que** les images radiographiques sont corrigées en utilisant des images radiographiques de synthèse, calculées à partir d'une géométrie déterminée ou connue au préalable ou d'un modèle de la géométrie, sachant que la géométrie ou le modèle de la géométrie correspond au moins grossièrement à l'objet à analyser.
